# EUROPÄISCHE PATENTSCHRIFT

(11) **EP 1 270 462 B1**
(45) Veröffentlichungstag und Bekanntmachung des Hinweises auf die Patenterteilung: **07.12.2005**
(21) Anmeldenummer: 02008581.7
(22) Anmeldetag: 16.04.2002
(51) Int. Cl.: B65G 47/90

(54) **Übergabevorrichtung und -verfahren für Folienbeutel**
Transfer apparatus and method for standing pouch
Appareil de transfert et procédé pour poche autostable

(30) Priorität: 08.06.2001 DE 10127896
(43) Veröffentlichungstag der Anmeldung: 02.01.2003
(73) Patentinhaber: INDAG Gesellschaft für Industriebedarf mbH & Co. Betriebs KG, 69214 Eppelheim/Heidelberg (DE)
(72) Erfinder:
(74) Vertreter: Grünecker, Kinkeldey, Stockmair & Schwanhäusser Anwaltssozietät

(56) Entgegenhaltungen:
- EP-A- 1 247 770
- WO-A-01/32510
- FR-A- 1 533 856
- US-A- 3 066 787
- US-A- 5 579 893
- US-A- 5 884 749

## Beschreibung

Die Erfindung betrifft ein Verfahren zum Übergeben von Folienbeuteln, die von einer Zuführeinrichtung in mehreren parallelen Reihen an eine Abfördereinrichtung herangeführt werden die die Folienbeutel in einer fortlaufenden Reihe weiterbefördert und eine Vorrichtung zur Durchführung des Verfahrens.

Aus der US-A-5 .579 893 ist ebenfalls bereits eine Zuführeinrichtung bekannt, die Gegenstände in parallelen Reihen zufördert, eine Abfördervorrichtung, die die Gegenstände in einer fortlaufenden Reihe im Wesentlichen senkrecht zur Zuführrichtung abfördert und eine Übergabevorrichtung , die jeweils eine Anzahl Gegenstände, die der Anzahl der zugeförderten Reihen entspricht, von der Zuführeinrichtung übernimmt, in Richtung der Bewegung der Abfördereinrichtung vorbeschleunigt und an die Abfördereinrichtung abgibt. Die zu transportierenden Gegenstände werden über ein Vakuumsystem angehoben. Der Träger bewegt sich nicht in vertikaler Richtung nach oben, sondern führt lediglich eine schleifenförmige Bewegung durch.

Die nachveröffentlichte EP-A-1 247 770 beschreibt bereits ein System, das Obst aus mehreren Reihen in eine Reihe überführt.

Die FR-A-1533856 beschreibt das Transportieren und Verladen von Säcken über eine Zuführeinrichtung.

Folienbeutel, die als Verpackungsmittel eingesetzt werden, werden heutzutage mehrheitlich automatisch behandelt, z.B. gefüllt, verschlossen und weiterverarbeitet. Derartige Folienbeutel bestehen z. B. aus zwei an drei Kanten miteinander verschweißten Seitenfolien, zwischen deren vierter Kante eine Bodenfolie eingeschweißt ist, so daß bei Auffalten dieser Bodenfolie Raum in dem Folienbeutel für das abgefüllte Produkt entsteht.

In einer solchen automatisierten Verarbeitungslinie werden häufig mehrere Folienbeutel nebeneinander gleichzeitig behandelt. So wird z.B. in einer Fülleinrichtung eine Anzahl von Folienbeuteln gleichzeitig geöffnet, von einer Transportvorrichtung weiterbefördert, gleichzeitig befüllt, wiederum weiterbefördert und dann gleichzeitig verschlossen.

An anderen Stellen der Verarbeitungslinie ist es jedoch erforderlich, daß die Folienbeutel einzeln einer Verarbeitungsstation zugeführt werden. Ein typisches Beispiel ist z.B. die Anbringung von Trinkhalmen an Getränkefolienbeuteln.

So entsteht das Problem, daß die Folienbeutel von einer Transporteinrichtung, die eine Anzahl Folienbeutel parallel zuführt, an eine andere Transporteinrichtung übergeben werden müssen, von der die Folienbeutel in einer einzelnen Reihe zur Weiterverarbeitung abgeführt werden. Dies führt zu einem diskontinuierlichen Betrieb, da immer eine zugeführte Anzahl - entsprechend der Reihenzahl, die parallel zugeführt wird - gleichzeitig übergeben werden muss, während die Abfördereinrichtung steht. Durch die in derartigen Verarbeitungsanlagen heutzutage eingesetzten Geschwindigkeiten entstehen zudem bei der Übergabe starke Beschleunigungs- und Bremskräfte, die gerade bei Folienbeuteln leicht zu einer Schädigung führen können.

Es ist daher die Aufgabe der vorliegenden Erfindung, ein Verfahren und eine Vorrichtung zur Übergabe von Folienbeuteln von einer Zuführeinrichtung, die die Folienbeutel in parallelen Reihen gleichzeitig zuführt, an eine Abfördereinrichtung, die die Folienbeutel in einer einzelnen fortlaufenden Reihe abfördert, anzugeben, wobei ein kontinuierlicher und schneller Betrieb möglich ist und die Beschleunigungs- und Bremskräfte auf die Folienbeutel reduziert sind.

Diese Aufgabe wird durch ein Verfahren mit den Merkmalen des Anspruchs 1 und durch eine Vorrichtung mit den Merkmalen des Anspruchs 6 gelöst. Vorteilhafte Ausgestaltungen sind Gegenstand der jeweiligen Unteransprüche.

Gemäß dem erfindungsgemäßen Verfahren wird jeweils eine Anzahl Folienbeutel, die gleichzeitig an eine Übergabestation herangeführt wird, auf einmal von einer Übergabevorrichtung aufgenommen, von dieser in Richtung der Bewegung der Abfördereinrichtung vorbeschleunigt, an die Abfördereinrichtung abgegeben und von dieser darauffolgend im wesentlichen senkrecht zur Zuführrichtung abgefördert. Das erfindungsgemäße Verfahren macht einen kontinuierlichen Betrieb möglich. Während eine Anzahl von Folienbeutel durch die Übergabevorrichtung zur Abfördereinrichtung transportiert wird und auf diese übergeben wird, wird eine weitere Anzahl von Folienbeutel durch die Zuführeinrichtung der Übergabestation zugeführt. Andererseits bewegt sich die Abfördereinrichtung weiter und fördert bereits übergebene Folienbeutel zur Weiterverarbeitung ab, während die Übergabevorrichtung von der Zuführeinrichtung eine neue Anzahl von Folienbeutel übernimmt und zur Abfördereinrichtung transportiert. Bei entsprechender Einstellung der Relativgeschwindigkeit zwischen der Zufördereinrichtung und der Abfördereinrichtung ist so ein kontinuierlicher Betrieb gewährleistet. Durch die Vorbeschleunigung der übernommenen Folienbeutel in Abförderrichtung wird zudem erreicht, daß die Beschleunigungskräfte beim Abgeben an die Abfördereinrichtung reduziert sind. So wird eine Schädigung bei der Abgabe an die Abfördereinrichtung vermieden. Geringe Beschleunigungskräfte bei der Abgabe erhöhen auch die Genauigkeit der Positionierung der Beutel auf der Abfördereinrichtung.

Besonders effektiv ist das erfindungsgemäße Verfahren, wenn die Geschwindigkeiten der Abfördereinrichtung und der Übergabevorrichtung derart aufeinander abgestellt sind, daß die Abfördereinrichtung eine Anzahl Folienbeutel, die gleichzeitig übergeben worden sind, in der gleichen Zeit abtransportiert, in der die Übergabevorrichtung eine weitere gleich große Anzahl von Folienbeuteln aufgenommen und zur Abgabe an die Abfördereinrichtung transportiert und vorbeschleunigt hat. Auf diese Weise ist gewährleistet, daß die Kapazität der Abfördereinrichtung optimal ausgenutzt wird, da zwischen den einzelnen Folienbeuteln keine unregelmäßigen Abstände auf der Abgabevorrichtung entstehen können. Dies erleichtert zudem die weitere Verarbeitung in automatisierten Verarbeitungsstationen.

Vorteilhafterweise kann bei dem erfindungsgemäßen Verfahren vorgesehen sein, daß die Relativgeschwindigkeit zwischen der Abfördereinrichtung und den Folienbeuteln im Moment der Abgabe an die Abfördereinrichtung Null oder nahezu Null ist. So treten während der Abgabe überhaupt keine Beschleunigungskräfte auf die Folienbeutel auf, wodurch die Gefahr einer Schädigung der Folienbeutel weiter verringert ist und die Genauigkeit der Beutelpositionierung erhöht wird.

Einfacherweise werden die Folienbeutel von der Abfördereinrichtung in leicht geneigter Stellung abtransportiert. Eine solche geneigte Stellung macht einen leichten Abgabeprozess möglich, da die Folienbeutel aufgrund ihrer geneigten Stellung auf der Abgabevorrichtung gehalten werden.

Dabei können die Folienbeutel von der Übergabevorrichtung direkt auf die Abfördereinrichtung abgesetzt werden. Einfacher ist es jedoch, wenn die Folienbeutel von der Zuführeinrichtung angehoben werden, über die Abfördereinrichtung transportiert werden und dort freigegeben werden. Auf diese Weise sind die Präzisionsanforderungen an den Abgabevorgang reduziert.

Die erfindungsgemäße Vorrichtung weist zur Durchführung des erfindungsgemäßen Verfahrens eine Zuführeinrichtung auf, die Folienbeutel in parallelen Reihen zufördert, eine Abfördereinrichtung, die die Folienbeutel in einer fortlaufenden Reihe im Wesentlichen senkrecht zu der Zuführungsrichtung abfördert, und eine Übergabevorrichtung, die jeweils eine Anzahl Folienbeutel, die der Anzahl der zugeförderten Reihen entspricht, von der Zuführeinrichtung übernimmt, in Richtung der Bewegung der Abfördereinrichtung vorbeschleunigt und an die Abfördereinrichtung abgibt.

Die Übergabevorrichtung kann z. B. in der Art eines Roboters von einem Mikroprozessor gesteuert die einzelnen individuellen Bewegungen durchführen. Besonders einfach ist jedoch eine Übergabevorrichtung, die einen Träger, eine dazu parallele Quertraverse mit Trageeinrichtungen für die Folienbeutel und mindestens einen Hebelarm umfaßt, der die Quertraverse und den Träger miteinander verbindet, wobei die Verbindungen so ausgestaltet sind, daß der Winkel, den der Hebelarm mit dem Träger bzw. der Quertraverse einschließt, veränderbar ist. Eine solche Anordnung ermöglicht durch Veränderung des Winkels auf leichte Weise die Vorbeschleunigung der aufgenommenen Folienbeutel.

Besonders stabil ist eine solche Konstruktion, wenn mindestens zwei Hebelarme vorgesehen sind, so daß der Träger, die Hebelarme und die Quertraverse ein Parallelogramm mit veränderlichem Winkel bilden.

Die Veränderung des Winkels kann auf verschiedene Arten realisiert werden. Eine einfache Möglichkeit ist die Verschwenkung eines Hebelarmes mit Hilfe eines Motors. Dieser Motor kann so gesteuert sein, daß die Quertraverse und die Abfördereinrichtung bei der Abgabe der Folienbeutel eine Relativgeschwindigkeit von Null oder nahezu Null haben. Auf diese Weise wirken auf die Folienbeutel bei dem Abgabevorgang keine Beschleunigungskräfte, was die Gefahr einer Schädigung verringert. Vorteilhafterweise kann vorgesehen sein, daß die Bewegung der Quertraverse im Bereich der Abfördereinrichtung so hoch ist, daß sie geringfügig höher ist als ein Folienbeutel, der sich auf der Abfördereinrichtung befindet. Auf diese Weise wird vermieden, daß die Bewegung der Quertraverse die Abförderung der Folienbeutel behindern könnte. Außerdem kann auf diese Weise leicht realisiert werden, daß die Folienbeutel auf die Abfördereinrichtung freigegeben werden, was eine einfache Abgabemöglichkeit darstellt.

Dazu kann die Quertraverse während des Übergabevorganges eine Hubbewegung durchführen. Einfacherweise ist dazu eine Kulissenführung vorgesehen, die die Hubbewegung während der Veränderung des Winkels zwischen dem mindestens einen Hebelarm und dem Träger bewirkt. Eine derartige Kulissenführung ist eine einfache, mechanische und kostengünstige Realisierungsmöglichkeit. Der Hub kann auch pneumatisch oder motorisch erfolgen.

Die Trägereinrichtung kann an der Quertraverse Klammern umfassen, die die Folienbeutel an deren oberen Ende greifen können. Die Zuführeinrichtung kann ein Endlosband sein, auf der eine Anzahl von Folienbeuteln parallel befördert wird.

Auf dem Endlosband können Aufnahmekästen angeordnet sein, in denen die Folienbeutel zugeführt werden. Die Zuführeinrichtung kann aus parallel laufenden Ketten mit hieran angebrachten Aufnahmekästen (30) bestehen, in denen die Folienbeutel (1a) zugeführt werden.

Die Abfördereinrichtung kann z.B. ein Transportband umfassen. Vorteilhafterweise sind auf einem solchen Transportband Halterungen vorgesehen, in denen die Folienbeutel transportiert werden. Derartige Halterungen sorgen für einen sicheren Abtransport. Besonders einfach lässt sich ein solcher sicherer Abtransport realisieren, wenn die Halterungen so ausgestaltet sind, daß die Folienbeutel in leicht geneigter Stellung transportiert werden.

Dabei kann vorgesehen sein, daß die Folienbeutel direkt nebeneinander abtransportiert werden. In vorteilhafter Ausgestaltung weisen die Halterungen jedoch Seitenführungen für die Folienbeutel auf, die auf leichte Weise eine regelmäßige Anordnung der Folienbeutel auf dem Transportband gewährleisten.

Im folgenden wird anhand der anliegenden Figuren eine Ausführungsform der erfindungsgemäßen Vorrichtung und das erfindungsgemäße Verfahren näher erläutert.

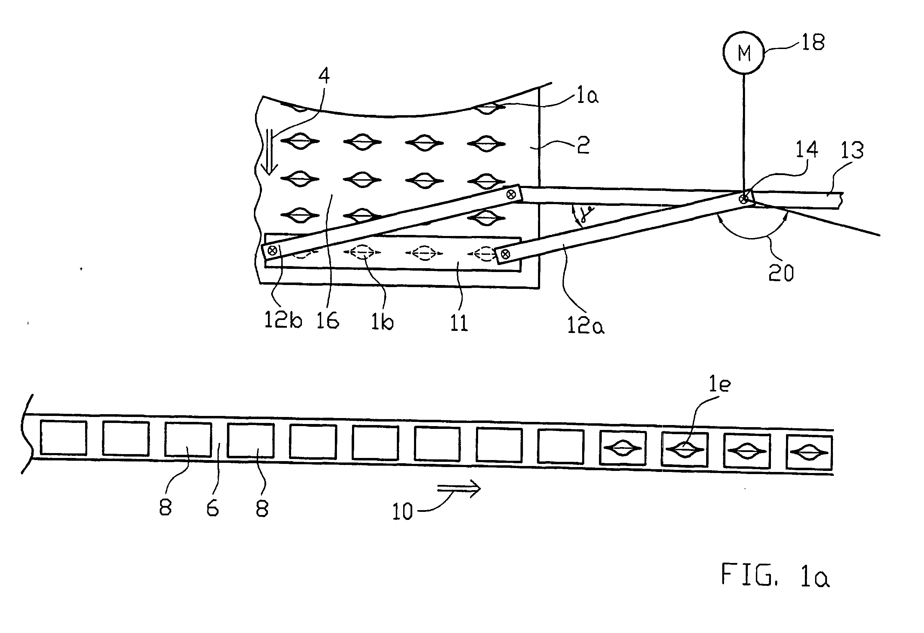

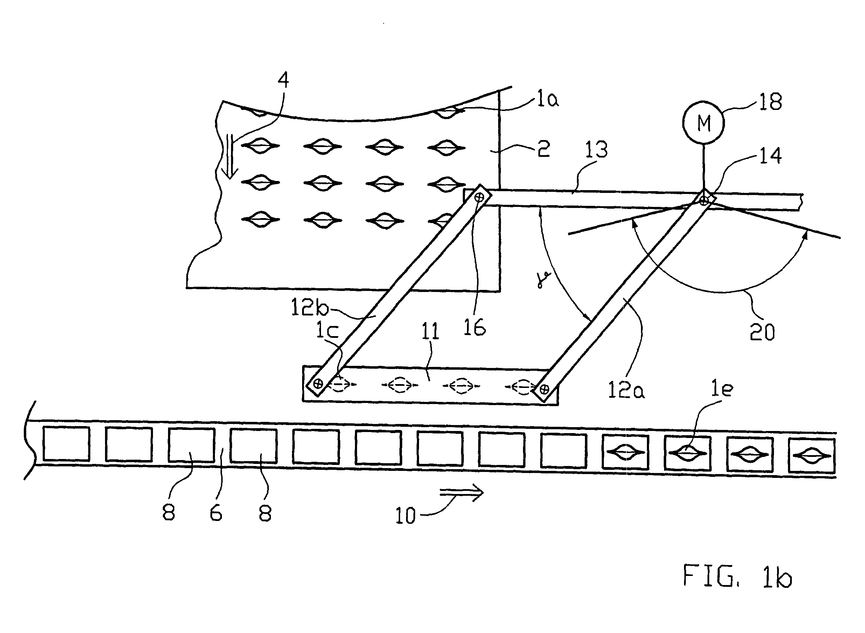

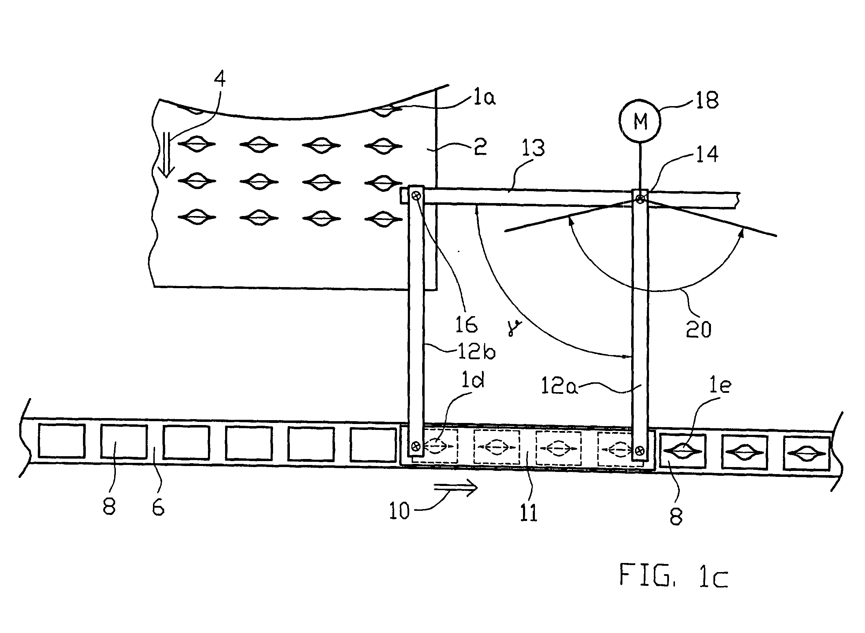

Dabei zeigt
- Figur 1 a: eine schematisierte Draufsicht auf eine Übergabestation im Moment der Folienbeutelaufnahme,
- Figur 1 b: eine schematisierte Draufsicht auf eine Übergabestation in einem Zwischenzustand,
- Figur 1 c: eine schematisierte Draufsicht einer Übergabestation im Moment der Folienbeutelabgabe, und
- Figur 2: eine seitliche Schemaansicht zur Illustration des vollständigen Übergabevorganges.

In den Figuren 1 a bis 1 c ist der Übergabebereich gezeigt. Ein solcher Übergabebereich liegt z.B. in einer Getränkeabfüllanlage vor. Getränkefolienbeutel 1, die gefüllt und verschlossen worden sind, werden mit Hilfe der Übergabevorrichtung an eine Abfördereinrichtung abgegeben, die die Getränkefolienbeutel z.B. zu einer Trinkhalmanbringstation weiterbefördert.

Gefüllte und verschlossene Getränkefolienbeutel 1 a werden von einer Zuführeinrichtung 2 in Richtung der Zuführrichtung 4 zugeführt.

13 bezeichnet einen Träger, an dem an Angelpunkten 14 und 16 schwenkbare Hebelarme 12a,12b angelenkt sind. Zur Verschwenkung in Richtung des Pfeiles 20 ist ein Motor 18 vorgesehen. 11 bezeichnet eine Quertraverse, an deren Unterseite Klammereinrichtungen vorgesehen sind, die in Figur 1 a bis c nicht explizit dargestellt sind. Gestrichelt sind in Figur 1 a Folienbeutel 1 b dargestellt, die von der Quertraverse 11 übernommen werden. Die Quertraverse 11, die zwei Hebelarme 12a,12b und der Träger 13 bilden ein Parallelogramm mit einem veränderlichen Winkel γ.

6 bezeichnet eine Abfördereinrichtung, die sich in Pfeilrichtung 10 bewegt. Auf dieser Abfördereinrichtung 6 befinden sich Halterungen 8. 1e bezeichnet Getränkefolienbeutel, die bereits abgefördert werden.

Figur 1 b zeigt dieselbe Übergabestation zu einem späteren Zeitpunkt, in welchem der Winkel y zwischen den Hebelarmen und dem Träger vergrößert ist.1 c bezeichnet Folienbeutel, die hängend von der Quertraverse 11 transportiert werden.

Figur 1 c zeigt wiederum dieselbe Übergabestation zum Zeitpunkt der Abgabe der Folienbeutel 1 d von der Quertraverse 11 an die Abfördereinrichtung 6.

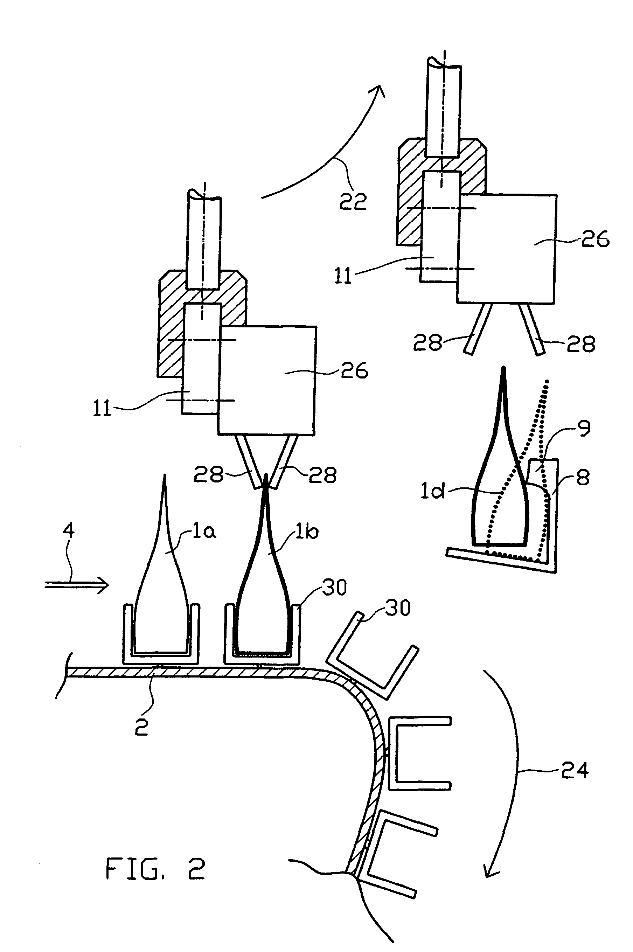

In Figur 2 ist eine seitliche Schemazeichnung derselben Übergabestation gezeigt. An der Quertraverse 11 ist ein Klammermechanismus 26 mit Klammern 28 vorgesehen. Pfeil 24 bezeichnet die Rückführungsrichtung der entleerten Aufnahmekästen 30, in denen die Folienbeutel 1 a zugeführt worden sind.

Pfeil 22 zeigt die Hubbewegung der Quertraverse 11, die - wie noch beschrieben wird - während des Verschwenkungsvorganges der Hebelarme 12a,12b ausgelöst wird.

In Figur 2 ist in der rechten oberen Hälfte ein zeitlich späterliegender Zustand der Übergabevorrichtung angedeutet, in welchem nach der Hubbewegung 22 die Klammern 28 oberhalb der Halterungen 8 des Abfördertransportbandes 6 geöffnet sind. Mit 9 sind Seitenführungen dieser Halterungen 8 bezeichnet. Die Ansicht zeigt, daß die Bodenfläche 8 der Halterungen geneigt ist und die Halterungen nur eine Rückwand aufweisen. In durchgezogener Linie ist ein Folienbeutel kurz nach dem Öffnen der Klammer 28 gezeigt. Gestrichelt ist ein Folienbeutel angedeutet, der - einen Moment später - an der Rückwand der Halterung anliegt.

Im folgenden wird das erfindungsgemäße Verfahren anhand der Funktionsweise der erfindungsgemäßen Vorrichtung am Beispiel einer Übergabevorrichtung in einer Getränkefolienbeutelabfüllmaschine erläutert.

Die Getränkefolienbeutel werden von der Zuführeinrichtung 2 in parallelen Reihen zugeführt. Jede beliebige Anzahl paralleler Reihen ist dabei vorstellbar. Die Getränkefolienbeutel 1 a werden dabei in Aufnahmekästen 30 transportiert, die auf der Zufördereinrichtung 2 befestigt sind.

Wie in der linken Hälfte der Figur 2 bzw. in Figur 1 a gezeigt, greifen Klammern 28 an die Getränkefolienbeutel 1 b im Übergabebereich an. Sobald die Klammern 28 geschlossen sind, beginnt der Motor 18 die Bewegung des Hebelarmes 12a in Richtung 20. Es entsteht ein Zustand, wie er in Figur 1 b gezeigt ist.

Während die Getränkefolienbeutel 1 c von der Zuführeinrichtung 2 mit Hilfe der Quertraverse 11 und der Klammern 28 wegbefördert werden, bewegt sich die Zuführvorrichtung 2 kontinuierlich weiter, um eine weitere Anzahl von Getränkefolienbeutel in den Übergabebereich zu bringen. Während des Abtransportes der Getränkefolienbeutel 1 c wird eine Hubbewegung der Quertraverse 11 ausgelöst. Dazu ist z.B. eine Kulissenführung vorgesehen, die aus Gründen der Übersichtlichkeit in den Figuren nicht explizit dargestellt ist, als Alternative dient ein motorischer oder pneumatischer Antrieb. Eine einfache Realisierung ist z. B. eine Rampe, gegen die die Hebelarme 12a bzw.12b anlaufen, während sie durch den Motor 18 verschwenkt werden.

Die Verschwenkung 20 der Hebelarme 12a und 12b erfolgt kontinuierlich bis zu dem Zustand der Figur 1 c. Die Geschwindigkeit der Schwenkbewegung ist dabei so gewählt, daß die Quertraverse 11 zu dem Zeitpunkt, der in Figur 1 c gezeigt ist, dieselbe Geschwindigkeit in Abförderrichtung 10 aufweist, wie das Transportband 6.

In diesem Zustand werden z.B. durch eine Steuerung die Klammern 28 geöffnet und die Folienbeutel 1 d fallen in die darunter befindlichen Halterungen 8. Dabei werden sie von den Seitenführungen 9 in ihrer seitlichen Position ausgerichtet. Die Halterungen 8 sind, wie es in Figur 2 gezeigt ist, mit einer leicht geneigten Bodenfläche ausgestattet, so daß die Folienbeutel schräg zu liegen kommen. Da sich das Transportband 6 mit den Halterungen 8 kontinuierlich bewegt, werden die Folienbeutel 1 e nach dem Abwurf kontinuierlich abgefördert. Die Relativgeschwindigkeit der Folienbeutel 1d und des Transportbandes 6 beim Abgabeprozess ist Null oder nahezu Null, so daß keine Beschleunigungskräfte auf die Folienbeutel wirken, die den Folienbeuteln schaden könnten.

Nach der Freigabe wird die Schwenkbewegung der Hebelarme 12a und 12b weiter fortgesetzt, wie es durch den Pfeil 20 in den Figuren 1 a bis 1 c dargestellt ist. Schließlich wird die Schwenkbewegung der Hebelarme 12a und 12b umgekehrt und die Quertraverse auf dem selben Weg wieder zurückgeführt, der in den Figuren 1 a bis 1 c angedeutet und oben beschrieben ist.

Dabei wird die Kulissenführung in umgekehrter Richtung durchlaufen. Auch hier kann alternativ ein motorischer oder pneumatischer Antrieb verwendet werden. Da die Hubbewegung 22 die Quertraverse in eine Höhe gehoben hat, die ausreichend hoch über dem Transportband 6 ist, ist gewährleistet, daß die Klammern 28 auf dem Rückweg der Quertraverse 11 nicht mit dem bereits abgelegten Folienbeuteln 1 e zusammenstößt.

Die Zurückschwenkbewegung wird fortgesetzt, bis wieder der Zustand erreicht ist, der in Figur 1 a gezeigt ist, und der Übergabevorgang wird mit der nächsten Anzahl von Folienbeuteln wiederholt. Während die Quertraverse 11 nach dem Abgabevorgang, der in Figur 1 c gezeigt ist, weiter- bzw. zurückgeschwenkt wird und eine neue Anzahl von Folienbeuteln 1 b an der Quertraverse mit den Klammern 28 übernommen und zum Transportband 6 verbracht wird, bewegt sich dieses kontinuierlich weiter. Auf diese Weise ist bei geeigneter zeitlicher Abstimmung das Transportband 6 genau um eine solche Strecke weiter vorgerückt, daß die Folienbeutel 1 d direkt anschließend an die zuvor abgegebene Anzahl von Folienbeuteln auf das Transportband 6 abgeworfen werden können.

Die oben beschriebene Vorrichtung und das dazugehörige Verfahren ermöglichen es also, daß zwei kontinuierlich fördernde Transportbänder eingesetzt werden können und eine Übergabe möglich ist, obwohl auf dem einen Transportband eine ganze Anzahl von Folienbeuteln gleichzeitig zu der Übergabestation gefördert werden, während die andere Fördereinrichtung eine einzelne fortlaufende Reihe abführt. Ein derartiges kontinuierliches Zu- bzw. Abführen erleichtert das Integrieren einer solchen Übergabevorrichtung in eine automatisierte Verarbeitungsanlage. Durch die Vorbeschleunigung der Folienbeutel auf die Geschwindigkeit des abfördernden Transportbandes wird neben einer Beschleunigung des gesamten Vorganges eine Verringerung der Gefahr der Schädigung der Folienbeutel erreicht.

## Patentansprüche

1. Verfahren zum Übergeben von Folienbeuteln, z. B. Getränkefolienbeuteln, die von einer Zuführeinrichtung (2) in mehreren parallelen Reihen an eine Übergabestation geführt werden, an eine Abfördereinrichtung (6), die die Folienbeutel (1 e) in einer fortlaufenden Reihe im wesentlichen quer zur Zuführrichtung (4) weiterbefördert, bei welchem eine Anzahl zugeführter Folienbeutel (1 b,1 c,1 d) gleichzeitig durch eine Übergabevorrichtung (11) von der Zuführeinrichtung (2) aufgenommen, in Richtung (10) der Bewegung der Abfördereinrichtung (6) vorbeschleunigt, von der Übergabevorrichtung (11) an die Abfördereinrichtung (6) abgegeben und darauffolgend von dieser abgefördert wird, **dadurch gekenzeichnet, daß**
die Übergabevorrichtung einen Träger (13), eine dazu parallele Quertraverse (11) mit Trageeinrichtungen (28) für die Folienbeutel (1c) und mindestens einen Hebelarm (12a, b) umfasst, der die Quertraverse (11) und den Träger (13) verbindet, wobei sich beim Transport der Folienbeutel der Winkel, den der mindestens eine Hebelarm (12a, b) mit dem Träger (13) bzw. der Quertraverse (11) einschließt, verändert,
sich die Quertraverse (11) im Bereich der Abfördereinrichtung (6) so hoch bewegt, dass sie geringfügig höher ist als ein Folienbeutel (1 d, 1 e), der sich auf der Abfördereinrichtung befindet, und
die Quertraverse während des Übergabevorgangs eine Hubbewegung (22) durchführt.

2. Verfahren nach Anspruch 1,
**dadurch gekennzeichnet, daß** die Bewegungen der Abfördereinrichtung (6) und der Übergabevorrichtung (11) derart aufeinander abgestimmt sind, daß die Abfördereinrichtung (6) eine Anzahl Folienbeutel (1 e), die gleichzeitig von der Übergabevorrichtung (11) übergeben worden sind, in der gleichen Zeit abtransportiert, in der die Übergabevorrichtung (11) eine weitere gleich große Anzahl von Folienbeutel (1 b,1 c,1 d) aufgenommen und zur Abgabe an die Abfördereinrichtung (6) transportiert und vorbeschleunigt hat.

3. Verfahren nach einem der Ansprüche 1 oder 2,
**dadurch gekennzeichnet, daß**
die Relativgeschwindigkeit der Abfördereinrichtung (6) und der Folienbeutel (1 d) im Moment der Abgabe an die Abfördereinrichtung Null oder nahezu Null ist.

4. Verfahren nach einem der Ansprüche 1 bis 3,
**dadurch gekennzeichnet, daß**
die Folienbeutel (1 e) von der Abfördereinrichtung (6) in leicht geneigter Stellung abtransportiert werden.

5. Verfahren nach Anspruch 4,
**dadurch gekennzeichnet, daß**
die Folienbeutel (1 b) bei der Aufnahme von der Zuführeinrichtung (2) angehoben werden und bei der Abgabe an die Abfördereinrichtung (6) freigegeben werden.

6. Vorrichtung zur Übergabe von Folienbeuteln, z.B. Getränkefolienbeuteln, mit einer Zuführeinrichtung (2), die Folienbeutel (1a) in parallelen Reihen zufördert, einer Abfördereinrichtung (6), die die Folienbeutel (1 e) in einer fortlaufenden Reihe im wesentlichen senkrecht zur Zuführrichtung abfördert, und einer Übergabevorrichtung (11), die jeweils eine Anzahl Folienbeutel (1 b), die der Anzahl der zugeförderten Reihen entspricht, von der Zuführeinrichtung (2) übernimmt, in Richtung der Bewegung der Abfördereinrichtung (6) vorbeschleunigt und an die Abfördereinrichtung (6) abgibt, **dadurch** gekenzeichnet, daß :
die Übergabevorrichtung einen Träger (13), eine dazu parallele Quertraverse (11) mit Trageeinrichtungen (28) für die Folienbeutel (1 c) und mindestens einen Hebelarm (12a,12b) umfaßt, der die Quertraverse (11) und den Träger (13) verbindet, wobei der Winkel, den der mindestens eine Hebelarm (12a,12b) mit dem Träger (13) bzw. der Quertraverse (11) einschließt, veränderbar ist,
wobei die Übergabevorrichtung derart ausgestaltet ist, daß die Bewegung der Quertraverse (11) im Bereich der Abfördereinrichtung (6) so hoch ist, daß sie geringfügig höher ist, als ein Folienbeutel, (1 d,1 e), der sich auf der Abfördereinrichtung (6) befindet, und
die Quertraverse (11) während des Übergabevorganges eine Hubbewegung (22) durchführt.

7. Vorrichtung nach Anspruch 6,
**dadurch gekennzeichnet, daß**
mindestens zwei Hebelarme (12a,12b) vorgesehen sind und der Träger (13), die Hebelarme und die Quertraverse (11) ein Parallelogramm mit veränderlichem Winkel (γ) bilden.

8. Vorrichtung nach einem der Ansprüche 6 und 7,
**dadurch gekennzeichnet, daß**
der Winkel (γ) mit Hilfe eines Motors (18) verändert werden kann, der einen Hebelarm (12a) verschwenkt.

9. Vorrichtung nach Anspruch 8,
**dadurch gekennzeichnet, daß**
der Motor (18) so gesteuert ist, daß die Quertraverse (11) und die Abfördereinrichtung (6) bei der Abgabe der Folienbeutel (1d) die Relativgeschwindigkeit Null oder nahezu Null haben.

10. Vorrichtung nach Anspruch 6,
**dadurch gekennzeichnet, daß**
eine Kulissenführung die Hubbewegung (22) während der Veränderung des Winkels (λ) zwischen dem mindestens einen Hebelarm (12a,12b) und dem Träger (13) bewirkt oder der Hub durch einen pneumatischen oder motorischen Antrieb erfolgt.

11. Vorrichtung nach einem der Ansprüche 6 bis 10,
**dadurch gekennzeichnet, daß**
die Trägereinrichtungen an der Quertraverse (11) Klammern (28) umfassen, die die Folienbeutel (1 b,1 c,1 d) an deren oberem Ende greifen können.

12. Vorrichtung nach einem der Ansprüche 6 bis 11,
**dadurch gekennzeichnet, daß**
die Zuführeinrichtung (2) ein Endlosband ist, auf der eine Anzahl von Folienbeuteln (1a) parallel befördert wird.

13. Vorrichtung nach Anspruch 12,
**dadurch gekennzeichnet, daß**
auf dem Endlosband (2) Aufnahmekästen (30) angeordnet sind, in denen die Folienbeutel (1 a) zugeführt werden.

14. Vorrichtung nach einem der Ansprüche 6 bis 11,
**dadurch gekennzeichnet, daß**
die Zuführeinrichtung (2) parallel laufende Ketten mit hieran angebrachten Aufnahmekästen (30) sind, in denen die Folienbeutel (1a) zugeführt werden

15. Vorrichtung nach einem der Ansprüche 6 bis 13,
**dadurch gekennzeichnet, daß**
die Abfördereinrichtung ein Transportband (6) umfaßt.

16. Vorrichtung nach Anspruch 15,
**dadurch gekennzeichnet, daß**
auf dem Transportband (6) Halterungen (8) für die abzufördernden Folienbeutel (1 e) vorgesehen sind.

17. Vorrichtung nach Anspruch 16,
**dadurch gekennzeichnet, daß**
die Halterungen (8) derart ausgeformt sind, daß die Folienbeutel (1e) in leicht geneigter Stellung transportiert werden.

18. Vorrichtung nach einem der Ansprüche 15 und 16,
**dadurch gekennzeichnet, daß**
die Halterungen Seitenführungen für die Folienbeutel (1 e) aufweisen.

## Claims

1. A method for transferring film bags, e.g. beverage film bags, which are supplied by a supply means (2) in a plurality of parallel rows to a transfer station, to a conveying means (6) which further transports said film bags (1e) in a continuous row substantially in a direction transverse to the supply direction (4), wherein a number of supplied film bags (1 b, 1 c, 1 d) are simultaneously received by a transfer device (11) from said supply means (2), preaccelerated in direction (10) of the movement of said conveying means (6), discharged by said transfer device (11) to said conveying means (6) and then transported away by said means, **characterized in that**
said transfer device comprises a carrier (13), a transverse bar (11) parallel thereto with support means (28) for said film bags (1c), and at least one lever arm (12a, 12b) which connects said transverse bar (11) and said carrier (13), the angle enclosed by said at least one lever arm (12a, 12b) with said carrier (13) or transverse bar (11) varying during transportation of said film bags,
said transverse bar (11) in the area of said conveying means (6) being moved to such a high level that it is slightly higher than a film bag (1 d, 1 e) positioned on said conveying means,
said transverse bar (11) performing a lifting movement (22) during the transfer operation.

2. The method according to claim 1,
**characterized in that** the movements of said conveying means (6) and said transfer device (11) are coordinated such that said conveying means (6) transports away a number of film bags (1 e), which have simultaneously been transferred by said transfer device (11), within the same period of time during which said transfer device (11) has received a further identical number of film bags (1 b, 1 c, 1 d) and transported and preaccelerated said bags for discharge to said conveying means (6).

3. The method according to any one of claims 1 or 2,
**characterized in that**
the relative speed of said conveying means (6) and of said film bags (1 d) at the moment of discharge to said conveying means is zero or almost zero.

4. The method according to any one of claims 1 to 3,
**characterized in that**
said film bags (1 e) are transported away by said conveying means (6) in a slightly inclined position.

5. The method according to claim 4,
**characterized in that**
said film bags (1 b) are lifted from said supply means (2) when being received and are released upon discharge to said conveying means (6).

6. An apparatus for transferring film bags, such as beverage film bags, to a supply means (2) which supplies film bags (1 a) in parallel rows, a conveying
means (6) which transports away said film bags (1 e) in a continuous row in a direction substantially perpendicular to the supply direction, and a transfer device (11) which takes over a respective number of film bags (1 b) equal to the number of said supplied rows, from said supply means (2), preaccelerates said bags in the direction of movement of said conveying means (6) and discharges said bags to said conveying means (6), **characterized in that** said transfer device comprises a carrier (13), a transverse bar (11) parallel thereto with support means (28) for said film bags (1c), and at least one lever arm (12a, 12b) which connects said transverse bar (11) and said carrier (13), the angle enclosed by said at least one lever arm (12a, 12b) with said carrier (13) or transverse bar (11) being variable,
said transfer device being designed such that the movement of said transverse bar (11) in the area of said conveying means (6) is so high that it is slightly higher than a film bag (1d, 1 e) positioned on said conveying means (6), and
said transverse bar (11) performing a lifting movement (22) during the transfer operation.

7. The apparatus according to claim 6,
**characterized in that**
at least two lever arms (12a, 12b) are provided and that said carrier (13), said lever arms and said transverse bar (11) form a parallelogram of a variable angle (γ).

8. The apparatus according to any one of claims 6 and 7,
**characterized in that**
said angle (γ) can be varied with the help of a motor (18) which pivots a lever arm (12a).

9. The apparatus according to claim 8,
**characterized in that**
said motor (18) is controlled such that said transverse bar (11) and said conveying means (6) have the relative speed zero or almost zero during discharge of said film bags (1 d).

10. The apparatus according to claim 6,
**characterized in that**
a linkage guide effects the lifting movement (22) during variation of said angle (γ) between said at least one lever arm (12a, 12b) and said carrier (13), or said lift is effected by a pneumatic drive or a motor type drive.

11. The apparatus according to any one of claims 6 to 10,
**characterized in that**
said carrier means are provided on said transverse bar (11) with clamps (28) which are adapted to grip said film bags (1b, 1 c, 1 d) at the upper end thereof.

12. The apparatus according to any one of claims 6 to 11,
**characterized in that**
said supply means (2) is an endless belt on which a number of film bags (1 a) are conveyed in parallel.

13. The apparatus according to claim 12,
**characterized in that**
receiving cases (30) in which said film bags (1a) are supplied are arranged on said endless belt (2).

14. The apparatus according to any one of claims 6 to 11,
**characterized in that**
said supply means (2) are chains extending in parallel with receiving cases (30) mounted thereon, in which said film bags (1a) are supplied.

15. The apparatus according to any one of claims 6 to 13,
**characterized in that**
said conveying means comprises a transportation belt (6).

16. The apparatus according to claim 15,
**characterized in that**
holding means (8) for said film bags (1 e) to be transported away are provided on said transportation belt (6).

17. The apparatus according to claim 16,
**characterized in that**
said holding means (8) are shaped such that said film bags (1 e) are transported in a slightly inclined position.

18. The apparatus according to any one of claims 15 and 16,
**characterized in that**
said holding means comprise side guides for said film bags (1 e).

## Revendications

1. Procédé pour transférer des poches, par exemple, des poches pour boissons, qui sont introduites par un dispositif d'introduction (2), en plusieurs rangées parallèles au niveau d'une station de transfert, à un dispositif de transport (6), qui réachemine les poches (le) en une rangée continue, pour l'essentiel en travers du sens d'introduction (4), pour lequel un nombre de poches introduites (1b, 1c, 1d) est pris en même temps par un dispositif de transfert (11) du dispositif d'introduction (2), est préaccéléré dans le sens (10) du mouvement du dispositif de transport (6), est déchargé du dispositif de transfert (11) au dispositif de transport (6) et est ensuite transporté par celui-ci, **caractérisé en ce que**
le dispositif de transfert comprend un support (13), une traverse (11) parallèle à celui-ci avec des dispositifs de support (28) pour les poches (1c) et au moins un bras de levier (12a, b) qui relie la traverse (11) et le support (13), moyennant quoi lors du transport des poches, l'angle formé par le au moins un bras de levier (12a, b) avec le support (13) ou la traverse (11) est modifié,
la traverse (11) se déplace si haut dans la zone du dispositif de transport (6) qu'elle est légèrement plus haute qu'une poche (1d, 1e) qui se trouve sur le dispositif de transport, et
la traverse effectue un mouvement de levage (22) pendant le transfert.

2. Procédé selon la revendication 1, **caractérisé en ce que** les mouvements du dispositif de transport (6) et du dispositif de transfert (11) sont ajustés les uns aux autres de sorte que le dispositif de transport (6) transporte en même temps un nombre de poches (le) qui ont été transférées en même temps par le dispositif de transfert (11), dans lequel le dispositif de transfert (11) a reçu un autre nombre aussi élevé de poches (1b, 1c, 1d) et les a transportées et préaccélérées pour les charger sur le dispositif de transport (6).

3. Procédé selon l'une quelconque des revendications 1 ou 2, **caractérisé en ce que** la vitesse relative du dispositif de transport (6) et des poches (1d) est nulle ou quasiment nulle au moment du chargement sur le dispositif de transport.

4. Procédé selon l'une quelconque des revendications 1 à 3, **caractérisé en ce que** les poches (1e) sont transportées par le dispositif de transport (6) en position légèrement inclinée.

5. Procédé selon la revendication 4, **caractérisé en ce que** les poches (1b) sont soulevées lors de la réception par le dispositif d'introduction (2) et relâchées lors du chargement sur le dispositif de transport (6).

6. Dispositif de transfert des poches, par exemple de poches pour boissons, avec un dispositif d'introduction (2) qui transporte les poches (1a) dans des rangées parallèles, un dispositif de transport (6) qui transporte les poches (le) dans une rangée continue principalement verticale par rapport au sens d'introduction et un dispositif de transfert (11) qui, respectivement, reprend, préaccélère dans le sens du mouvement du dispositif de transport (6) et charge au niveau du dispositif de transport (6), un nombre de poches (1b) correspondant au nombre de rangées alimentées, du dispositif d'introduction (2), **caractérisé en ce que**
le dispositif de transfert comprend un support (13), une traverse (11) parallèle à celui-ci avec des dispositifs de support (28) pour les poches (1c) et au moins un bras de levier (12a, 12b) qui relie la traverse (11) et le support (13), l'angle formé par le au moins un bras de levier (12a, 12b) avec le support (13) ou la traverse (11) étant modifiable,
moyennant quoi le dispositif de transfert est équipé de sorte que le mouvement de la traverse (11) est si haut dans la zone du dispositif de transport (6) qu'elle est légèrement plus haute qu'une poche (1d, 1e) qui se trouve sur le dispositif de transport (6) et
la traverse (11) effectue un mouvement de levage pendant le transfert.

7. Dispositif selon la revendication 6, **caractérisé en ce qu'**au moins deux bras de levier (12a, 12b) sont prévus et **en ce que** le support (13), les bras de levier et la traverse (11) forment un parallélogramme avec un angle (y) variable.

8. Dispositif selon l'une quelconque des revendications 6 et 7, **caractérisé en ce que** l'angle (y) peut être modifié à l'aide d'un moteur (18) qui fait osciller un bras de levier (12a).

9. Dispositif selon la revendication 8, **caractérisé en ce que** le moteur (18) est piloté de sorte que la traverse (11) et le dispositif de transport (6) ont une vitesse relative nulle ou quasiment nulle lors du chargement de la poche (1d).

10. Dispositif selon la revendication 6, **caractérisé en ce qu'**un guide de coulisse déclenche le mouvement de levage (22) pendant la modification de l'angle (y) entre au moins un bras de levier (12a, 12b) et le support (13), ou la course a lieu par le biais d'un dispositif d'entraînement pneumatique ou motorisé.

11. Dispositif selon l'une quelconque des revendications 6 à 10, **caractérisé en ce que** les dispositifs de support comprennent des griffes (28) au niveau de la traverse (11), lesquels peuvent saisir les poches (1b, 1c, 1d) par leur partie supérieure.

12. Dispositif selon l'une quelconque des revendications 6 à 11, **caractérisé en ce que** le dispositif d'introduction (2) est une boucle continue sur laquelle un nombre de poches (1a) est transporté parallèlement.

13. Dispositif selon la revendication 12, **caractérisé en ce que** des caisses de réception (30) sont disposées au niveau de la boucle continue (2), dans lesquelles les poches (1a) sont introduites.

14. Dispositif selon l'une quelconque des revendications 6 à 11, **caractérisé par** des chaînes, avec des caisses de réception (30) amenées de là, dans lesquelles les poches (1a) sont introduites, circulant parallèlement au dispositif d'introduction (2).

15. Dispositif selon l'une quelconque des revendications 6 à 13, **caractérisé en ce que** le dispositif de transport comprend un tapis de transport (6).

16. Dispositif selon la revendication 15, **caractérisé en ce que** des fixations (8) sont prévues sur le tapis de transport (6) pour les poches (le) à transporter.

17. Dispositif selon la revendication 16, **caractérisé en ce que** les fixations (8) sont déformées de sorte que les poches (le) sont transportées en position légèrement inclinée.

18. Dispositif selon l'une quelconque des revendications 15 et 16, **caractérisé en ce que** les fixations comportent des guidages latéraux pour les poches (le).
